Europäisches Patentamt

European Patent Office

Office européen des brevets

(11) Veröffentlichungsnummer : **0 442 574 B1**

## (12) EUROPÄISCHE PATENTSCHRIFT

(45) Veröffentlichungstag der Patentschrift :
**10.08.94 Patentblatt 94/32**

(21) Anmeldenummer : **91200284.7**

(22) Anmeldetag : **11.02.91**

(51) Int. Cl.⁵ : **G03B 42/02**

(54) Anordnung zum Abtasten einer Röntgenaufnahme.

(30) Priorität : **13.02.90 DE 4004348**

(43) Veröffentlichungstag der Anmeldung :
**21.08.91 Patentblatt 91/34**

(45) Bekanntmachung des Hinweises auf die
Patenterteilung :
**10.08.94 Patentblatt 94/32**

(84) Benannte Vertragsstaaten :
**DE FR GB**

(56) Entgegenhaltungen :
**US-A- 4 369 367**
**US-A- 4 829 181**
**US-A- 4 896 038**
**PROCEEDINGS OF SPIE, Application of Opti-**
**cal Instrumentation in Medicine XIV,vol. 626,**
**2.-7. Februar 1986, U. SCHIEBEL et al. "Image**
**quality in selenium-bared digital radiography"**
**Seiten 176-184**

(73) Patentinhaber : **Philips Patentverwaltung**
**GmbH**
**Wendenstrasse 35c**
**D-20097 Hamburg (DE)**
㊻ **DE**
Patentinhaber : **N.V. Philips'**
**Gloeilampenfabrieken**
**Groenewoudseweg 1**
**NL-5621 BA Eindhoven (NL)**
㊻ **FR GB**

(72) Erfinder : **Hillen, Walter, Dr.**
**Dinkermichsweg 38**
**W-5100 Aachen (DE)**
Erfinder : **Schiebel, Ulrich, Dr.**
**Zehntweg 60**
**W-5100 Aachen (DE)**

(74) Vertreter : **von Laue, Hanns-Ulrich, Dipl.-Ing. et**
**al**
**Philips Patentverwaltung GmbH**
**Wendenstrasse 35c**
**D-20097 Hamburg (DE)**

## Beschreibung

Die Erfindung betrifft eine Anordnung zum Abtasten einer Röntgenaufnahme, die auf einem zuvor örtlich gleichmäßig aufgeladenen, auf einem elektrisch leitfähigen Substrat vorgesehenen Photoleiter vorliegfeder in Abhängigkeit der örtlichen Strahlungsintensität entladen wird, mittels mehrerer Elektrometersonden, welche das Ladungsmuster des Photoleiters abtasten, wobei eine Messung des Abstandes zwischen den Elektrometersonden und dem Photoleiter mittels einer an das Substrat angekoppelten Wechselspannung erfolgt, die mittels Elektrometersonden abgetastet und zur Gewinnung von Abstands-Meßsignalen ausgefiltert wird.

Aus der Veröffentlichung "Proceedings of SPIE, Volume 626, 1986, S. 176 bis 184," ist eine derartige Anordnung bekannt, bei der ein zunächst gleichmäßig aufgeladener Photoleiter vorgesehen ist, der anschließend während einer Röntgenaufnahme in Abhängigkeit der örtlichen Strahlungsintensität unterschiedlich stark entladen wird. Das anschließend auf dem Photoleiter existierende Ladungsbild wird dann mittels mehrerer in einer Reihe angeordneter Elektrometersonden abgetastet.

Dabei besteht das Problem, daß die Größe der gemessenen Ladung abhängig ist von dem Abstand zwischen den Elektrometersonden und dem Photoleiter. Zur Messung dieses Abstandes ist bei der aus der oben genannten Veröffentlichung bekannten Anordnung vorgesehen, daß zwei äußere Elektrometersonden der Elektrometersondenreihe nicht zur Bestimmung von Bildwerten eingesetzt werden, sondern dazu, die Stärke eines auf den Photoleiter bzw. das Substrat angekoppelten Wechselspannungssignals zu messen. Da auch dieses gemessene Signal abhängig von der Größe des Luftspaltes zwischen den Elektrometersonden und dem Photoleiter ist, kann es zur Bestimmung des Abstandes herangezogen werden. Die beiden Elektrometersonden zur Bestimmung des Abstandes werden nicht zur Bestimmung von Bildwerten eingesetzt und umgekehrt werden die Elektrometersonden zur Bestimmung der Bildwerte nicht zur Bestimmung des Abstandes herangezogen. Die mittels der beiden Elektrometersonden gemessenen Abstandswerte werden nun dazu herangezogen, auf rechnerischem Wege den tatsächlichen Luftspalt für jede der Elektrometersonden zu bestimmen und deren Bildsignale entsprechend zu korrigieren. Dabei besteht das Problem, daß für die zwischen den beiden Meß-Elektrometersonden liegenden Bild-Elektrometersonden deren Abstände nur durch eine lineare Interpolation angenähert werden können. Tatsächlich ist der Photoleiter jedoch meist nicht plan, so daß die Abstände zumindest einzelner Elektrometersonden zum Photoleiter nicht richtig bestimmt werden können und infolgedessen auch deren Bildwerte nicht optimal korrigiert werden können.

Es ist Aufgabe der Erfindung, eine Anordnung der eingangs genannten Art weiter zu verbessern.

Zur Lösung dieser Aufgabe ist erfindungsgemäß vorgesehen, daß die Ausgangssignale sämtlicher Elektrometersonden zur Bildwerte-Bestimmung der Röntgenaufnahme herangezogen werden, daß die Ausgangssignale wenigstens einiger der Elektrometersonden mittels eines geeigneten Filters auch zur Bestimmung der Abstands-Meßsignale herangezogen werden und daß Verstellungsmittel vorgesehen sind, mittels der in Abhängigkeit der Meßsignale während der Abtastung der Röntgenaufnahme laufend der Abstand zwischen den Elektrometersonden und dem Photoleiter auf einen Sollwert eingestellt wird.

Bei dieser Anordnung werden also die Ausgangssignale sämtlicher Elektrometersonden zur Bestimmung der Bildwerte der Röntgenaufnahme herangezogen. Es müssen nicht Elektrometersonden vorgesehen werden, welche nur zur Bestimmung des Abstandes dienen, jedoch keine Bildwerte liefern.

Die Ausgangssignale wenigstens einiger der Elektrometersonden, die zur Bestimmung der Bildwerte herangezogen werden, werden gleichzeitig zur Bestimmung der Abstandsmeßsignale eingesetzt. Dazu wird die Wechselspannung beispielsweise mittels eines Bandpaßfilters ausgefiltert, das ein Meßsignal liefert, welches von dem Abstand zwischen dem Photoleiter, der über das Substrat mit der Wechselspannung beaufschlagt ist, und der jeweiligen Elektrometersonde abhängig ist. Damit die von den Elektrometersonden gelieferten Bildsignale nicht gestört werden, ist die Frequenz dieses Wechselspannungssignales so vorzusehen, daß sie oberhalb der höchsten in dem Bildsignal vorkommenen Frequenz liegt. Zur Bestimmung der Bildwerte sind die Bildsignale mit einem Tiefpaßfilter zu beaufschlagen, so daß die Meß-Wechselspannung ausgefiltert wird.

Mittels der so ausgefilterten Abstands-Meßsignale kann direkt auf den Abstand geschlossen werden.

Es sind Verstellungsmittel vorgesehen, mittels derer der Abstand zwischen den Elektrometersonden und dem Photoleiter einstellbar ist. Diese Verstellungsmittel werden nun dazu eingesetzt, diesen Abstand in Abhängigkeit der Meßsignale während der Abtastung einer Röntgenaufnahme laufend nachzuregeln, so daß ein vorgegebener Sollwert eingehalten wird. Auf diese Weise ist eine nachträgliche Korrektur der von den Elektrometersonden gelieferten Bildwerte nicht erforderlich. Es wird vielmehr sofort während der Aufnahme der Abstand laufend so eingestellt, daß er gleich bleibt und einen bestimmten Sollwert einhält. Die Anordnung bietet damit den Vorteil, daß auf Grund der laufenden Korrektur der Abstandswerte der Sollabstand relativ klein gehalten werden kann, so daß die Sonden nur den ihnen zugeordneten Bereich des Photoleiters abtasten und nicht dessen Nachbarbereiche. Dadurch ergibt sich eine gute Ortsauflösung der abgetasteten Röntgenaufnahme.

2

Darüber hinaus wird durch einen kleinen Sonden-Photoleiter-Abstand die Empfindlichkeit der Sonden, d.h. also auch der Signal-Rausch-Abstand der von ihnen gelieferten Signale verbessert.

Eine Abtastkorrektur kann im Idealfall für jede Elektrometersonde einzeln erfolgen. Dazu ist nach Ausgestaltungen der Erfindung vorgesehen, daß die Ausgangssignale aller Sensoren zur Bestimmung sowohl der Bildwerte wie auch der Abstands-Meßsignale herangezogen werden und daß mittels der Verstellungsmittel die Elektrometersonde unter Heranziehung des von ihr gelieferten Meßsignals auf den Soll-Abstand eingestellt wird.

Es hat sich gezeigt, daß es nicht unbedingt erforderlich ist, für jede Elektrometersonde individuelle Verstellungsmittel vorzusehen, da die Abstandsschwankungen zwischen den Elektrometersonden und dem Photoleiter sich über den relativ kleinen Abstand zwischen den Sonden nicht sehr stark ändern. Es genügt daher meistens, für eine Gruppe von Elektrometersonden Verstellungsmittel vorzusehen, welche die gesamte Gruppe verstellen. Dazu ist nach einer weiteren Ausgestaltung der Erfindung vorgesehen, daß mittels der Verstellungsmittel jeweils eine Gruppe benachbarter Elektrometersonden unter Heranziehung der von ihnen gelieferten Meßsignale so positioniert wird, daß der Soll-Abstand im Mittel eingehalten wird.

Nach weiteren Ausgestaltungen der Erfindung sind als Verstellungsmittel piezo-elektrische Elemente oder elektro-dynamische Mittel vorgesehen. Derartige Verstellungsmittel sind in ihrem Aufbau einfach und trotzdem in der Lage, den bei der Abtastung auftretenden Abstandsänderungen schnell genug zu folgen.

Für die Anordnung ist nach einer weiteren Ausgestaltung der Erfindung vorgesehen, daß die Abstands-Meßsignale mittels Bandpaßfiltern aus den Ausgangssignalen der Elektrometersonden gewonnen werden, daß die so gefilterten Meßsignale einer Steuerung zugeführt werden, die die Meßsignale mit einem Sollwert vergleicht und die Verstellungsmittel so ansteuert, daß die Soll-Abstände eingehalten werden.

Das auf den Photoleiter angekoppelte Wechselspannungssignal muß in einem Frequenzbereich außerhalb der Signale liegen, die bei der Abtastung des Ladungsbildes auftreten. Es ist vorteilhaft, das Meßsignal in einem Frequenzbereich oberhalb des Frequenzbereiches der Bildwerte vorzusehen. Die von den Elektrometersonden gelieferten Ausgangssignale werden zur Bestimmung der Abstands-Meßsignale je einem Bandpaßfilter zugeführt, das das entsprechende Wechselspannungssignal ausfiltert. Die so ausgefilterten Meßsignale wiederum werden einer Steuerung zugeführt. In dieser Steuerung wird jedes von den Elektrometersonden gelieferte Meßsignal mit einem Sollwert verglichen. Bei einer Abweichung der Meßwerte von dem Sollsignal werden die der entsprechenden Elektrometersonde zugeordneten Verstellungsmittel in der Weise angesteuert, daß die Abstands-Meßsignale wieder den Sollwert annehmen. Damit ist dann auch der Soll-Abstand zwischen der jeweiligen Elektrometersonde und dem Photoleiter eingestellt. Auf diese Weise erfolgt während der Abtastung eines Ladungsbildes auf dem Photoleiter, bei dem der Photoleiter relativ zu der Reihe der Elektrometersonden bewegt wird, laufend eine Korrektur des Abstandes zwischen den Elektrometersonden und dem Photoleiter.

Für eine Verwendung der erfindungsgemäßen Anordnung in einem Röntgenstrahlen-Untersuchungsgerät ergibt sich insbesondere der Vorteil, daß bei derartigen Untersuchungsgeräten zur möglichst geringen Strahlungsbelastung des Untersuchungsobjektes mit geringen Strahlungsdosen gearbeitet wird. Gerade bei geringen Strahlungsdosen fällt jedoch ein differierender bzw. zu großer Abstand zwischen Elektrometersonden und Photoleiter besonders stark ins Gewicht, da die Signale, aus denen die Bildwerte gewonnen werden, ohnehin nur einen relativ geringen Rauschabstand aufweisen. In diesem Falle ist also eine präzise Nachregelung des Abstandes von besonderer Bedeutung.

Anhand der Zeichnung wird ein Ausführungsbeispiel der Erfindung näher erläutert. Es zeigen:

Fig. 1     eine Schaltungsanordnung eines Teils einer Anordnung zum Abtasten einer Röntgenaufnahme mit Abstandsregelung,

Fig. 2     eine Schnittdarstellung einer ersten Ausführungsform der Anordnung mit piezo-elektrischen Verstellungsmitteln und

Fig. 3     eine Schnittdarstellung einer zweiten Ausführungsform der Anordnung mit elektro-dynamischen Verstellungsmitteln.

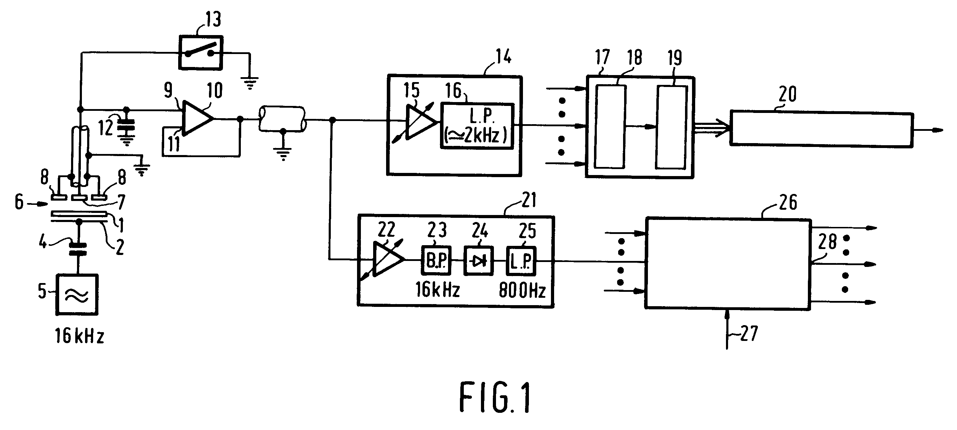

Fig. 1 zeigt ein Schaltbild einer Anordnung zum Abtasten einer Röntgenaufnahme mit Elektrometersonden, deren Ausgangssignale sowohl zur Bestimmung von Bildwerten wie auch zur Bestimmung von Abstands-Meßsignalen herangezogen werden. In Fig. 1 ist die entsprechende Signalverarbeitung größtenteils nur für eine Elektrometersonde dargestellt. Tatsächlich ist jedoch für jede Elektrometersonde eine entsprechende Signalverarbeitung vorgesehen.

In der Fig. 1 ist schematisch ein Photoleiter 1 dargestellt, der auf einem elektrisch leitfähigen Substrat 2 vorgesehen ist. Dieser Photoleiter 1 kann entweder, wie in der Figur angedeutet, eben sein, er kann aber auch eine Trommelform aufweisen. Der Photoleiter wird vor einer Röntgenaufnahme in in der Figur nicht dargestellter Weise gleichmäßig elektrisch aufgeladen. Während der Röntgenaufnahme wird der Photoleiter dann in in der Figur nicht dargestellter Weise in Abhängigkeit der Intensität der Röntgenstrahlen örtlich verschieden stark entladen. Dieses so entstandene Ladungsbild wird dann abgetastet.

Der Photoleiter 1 ist ferner über das Substrat 2 und über eine Kapazität 4 mit einer Wechselspannungsquelle 5 verbunden, welche beispielsweise ein Wechselspannungssignal mit einer Frequenz von 16 kHz erzeugt. Dieses Wechselspannungssignal ist über die Kapazität 4 an das Substrat 2 angekoppelt und dient zur Erzeugung der Abstands-Meßsignale.

In der Fig. 1 ist in einem bestimmten Abstand zu dem Photoleiter 1 eine Elektrometersonde 6 angedeutet, welche eine zentral angeordnete Abtastelektrode 7 und um die Abtastelektrode 7 herum angeordnete Abschirmelektroden 8 aufweist. In der Schaltbild-Darstellung gemäß Fig. 1 ist nur eine Elektrometersonde 6 angedeutet; eine Anordnung zur Abtastung eines Ladungsmusters enthält jedoch tatsächlich mehrere solcher Elektrometersonden 6.

Die Abtastelektrode 7 der Elektrometersonde 6 ist mit einem Eingang 9 eines Operationsverstärkers 10 verbunden, der die von der Elektrometersonde 6 gelieferten Signale verstärkt. Das Ausgangssignal des Verstärkers 10 ist auf einen weiteren Eingang 11 des Verstärkers zurückgeführt. Einer der Eingänge 9 oder 11 des Operationsverstärkers ist der negative Eingang, so daß der Operationsverstärker als Impedanzwandler arbeitet. Der Verstärker 10 weist eine Eingangskapazität auf, welche in der Fig. 1 zur Verdeutlichung als diskrete, gegen Masse geschaltete Kapazität 12 dargestellt ist.

Die Abtastelektrode 7 der Elektrometersonde 6 ist darüber hinaus mit einem Schalter 13 verbunden, mittels dessen die Abtastelektrode auf Masse geschaltet werden kann und der Abführung eventuell vorhandener Ladungen vor Abtastung einer Röntgenaufnahme dient.

Das Ausgangssignal des Verstärkers 10 ist einer ersten Signalverarbeitungseinheit 14 zugeführt, in der die für die Generierung der Bildwerte erforderlichen Signale ausgefiltert werden. In der Signalverarbeitungseinheit 14 ist dazu ein Verstärker 15 vorgesehen. Dem Verstärker 15 ist ein Tiefpaßfilter 16 nachgeschaltet, welches beispielsweise eine Grenzfrequenz von etwa 2 kHz aufweisen kann.

Das Ausgangssignal des Filters 16 ist einer Bildverarbeitungseinheit 17 zugeführt, welche einen Multiplexer 18 aufweist. Der Multiplexer 18 weist, wie in der Figur mittels mehrerer Pfeile angedeutet, soviele Eingänge auf, wie Elektrometersonden zur Abtastung vorgesehen sind. Jeder der Eingänge ist mit einem vollständigen Signalverarbeitungszweig mit Elektrometersonde 6, Verstärker 10 und Signalverarbeitungseinheit 14 verschaltet. An den Multiplexer 18 gelangen also auf diese Weise die tiefpaßgefilterten Ausgangssignale sämtlicher in einer Anordnung vorgesehener Elektrometersonden.

Dem Multiplexer 18 ist in der Bildverarbeitungseinheit 17 ein Analog/Digital-Umsetzer 19 nachgeschaltet, der die Bildwerte in digitale Werte umsetzt.

Dem Analog/Digital-Umsetzer kann dann beispielsweise ein Signalprozessor 20 nachgeschaltet sein, der in der Figur nur schematisch angedeutet ist und mittels dessen die Bildwerte weiter verarbeitet werden können.

Die Ausgangssignale des Verstärkers 10 sind außerdem einer zweiten Signalverarbeitungseinheit 21 zugeführt, in der die Abstands-Meßsignale gewonnen werden. Dazu ist in dieser Einheit 21 zunächst ein Verstärker 22 vorgesehen, dessen Ausgangssignale einem Bandpaßfilter 23 zugeführt sind, das auf die Frequenz des Wechselspannungsgenerators 5 abgestimmt ist. Die Ausgangssignale des Bandpaßfilters 23 werden mittels eines Gleichrichters 24 gleichgerichtet. Die so gleichgerichteten Signale sind einem Tiefpaßfilter 25 zugeführt, das beispielsweise eine obere Grenzfrequenz von etwa 800 Hz aufweist. Am Ausgang des Tiefpaßfilters 25 steht somit ein Spannungssignal zur Verfügung, dessen Größe ein Maß für den Abstand zwischen der Elektrometersonde 6 und dem Photoleiter 1 darstellt.

Dieses Ausgangssignal des Tiefpaßfilters 25 ist einer Steuerungseinheit 26 zugeführt. Auch hier gilt wieder, daß die Steuerungseinheit 26 soviele Eingänge aufweist wie Sonden vorgesehen sind. Jeder der Eingänge ist mit einer Elektrometersonde 6 und der nachfolgenden zugehörigen Signalverarbeitung beschaltet. Die Steuerungseinheit 26 vergleicht die ihr zugeführten Meßsignale mit einem an einem Eingang 27 zugeführten Sollwert und generiert in Abhängigkeit dieser Vergleiche ein an Ausgängen 28 zur Verfügung stehende Ausgangssignale, die in der Fig. 1 nicht dargestellte Verstellungsmittel ansteuern, mittels derer die jeweiligen Elektrometersonden wieder auf ihren Soll-Abstand positioniert werden.

Im folgenden wird die Funktionsweise der in Fig. 1 dargestellten Anordnung näher erläutert:

Nachdem auf dem Photoleiter 1 in der oben beschriebenen Weise mittels einer Röntgenbestrahlung ein entsprechendes Ladungsmuster erzeugt wurde, wird dieses mittels mehrerer Elektrometersonden abgetastet, von denen in der Fig. 1 nur eine Elektrometersonde 6 exemplarisch dargestellt ist. Während der Abtastung wird das Substrat 2 des Photoleiters 1 mittels der Wechselspannungsquelle 5 mit einer Wechselspannung beaufschlagt. Sowohl das auf dem Photoleiter 1 mittels der Röntgenstrahlung erzeugte Ladungsbild wie auch das auf den Photoleiter 1 angekoppelte Wechselspannungssignal des Generators 5 erzeugen in der Abtastelektrode 7 und der mit ihr verbundenen Kapazität 12 eine entsprechende Ladungsverschiebung. Diese Ladungsverschiebung wird mittels des Verstärkers 10, der ein Impedanzwandler ist, verstärkt. Dieses so verstärkte Signal enthält also sowohl die Signale, die auf das durch die Röntgenbestrahlung erzeugte Ladungsmuster zurückgehen, wie auch die Signale, die auf die von dem Wechselspannungsgenerator 5 gelieferte Wechselspannung zurückgehen. Dieses Signalgemisch ist nun einerseits der ersten Signalverarbeitungseinheit 14 zugeführt, in welcher mittels eines Tiefpaßfilters diejenigen Signalanteile herausgefiltert werden, die zur Generierung der Bildwerte benötigt werden. Die höherfrequenten Signalanteile, welche auf den Wechselspannungsgenerator 5 zurückgehen, werden mittels des Tiefpaßfilters hingegen unterdrückt. Hinter dem Tiefpaßfilter 16 sind also nur noch die auf das Ladungsmuster zurückgehenden Signale vorhanden. Diese Signale werden dann in der Bildverarbeitungseinheit 17 weiter verarbeitet. Dies geschieht in entsprechender Weise für alle Sensoren, die in einer in der Fig. nicht dargestellten Anordnung vorgesehen sind.

Das den Verstärker 10 verlassende Signalgemisch ist darüber hinaus der zweiten Signalverarbeitungseinheit 21 zur Generierung der Abstandsmeßsignale zugeführt. In dieser Einheit wird mittels des Bandpaßfilters 23 nur der Signalanteil herausgefiltert, der auf die Elektrometersonde 6 infolge der von dem Generator 5 gelieferten Wechselspannung induziert wurde. Nur dieses Meßsignal wird weiter verarbeitet, indem es zunächst gleichgerichtet und dann tiefpaßgefiltert wird. Es steht dann ein Spannungssignal zur Verfügung, das das Abstands-Meßsignal darstellt und dessen Größe ein Maß für den Abstand zwischen der Elektrometersonde 6 und dem Photoleiter 1 darstellt. Dieses Abstands-Meßsignal ist dann der Steuereinheit 26 zugefürt. Dies gilt in in der Fig. 1 nicht dargestellter Weise für sämtliche Abstands-Meßsignale der Anordnung. Dort werden die Abstands-Meßsignale mit einem Sollwert verglichen, der einen Soll-Abstand zwischen den Elektrometersonden und dem Photoleiter repräsentiert. In Abhängigkeit der Differenz des tatsächlich gemessenen Abstand-Meßsignals und dessen Sollwert generiert die Steuerungseinheit 26 ein an den Ausgängen 27 zur Verfügung stehende Signale, das den jeweiligen Elektrometersonden zugeordnete Steuerungsmittel in der Weise ansteuert, daß deren Abstands-Meßsignale wieder den Sollwert annehmen, daß also der gewünschte Abstand zwischen Elektrometersonde und Photoleiter wieder hergestellt ist.

Zur Verdeutlichung des Umstandes, daß sowohl das Bildwertsignal, wie auch das Abstands-Meßsignal von dem Abstand zwischen der Oberfläche des Photoleiters 1 und der Elektrometersonde 6 abhängig ist, sei auf folgende Beziehungen aufmerksam gemacht:

Für die an dem Eingang 9 des Verstärkers 10 anliegende Spannung $U_{in}$ gilt folgender Zusammenhang:

$$U_{in} = - Q_s / C_{in},$$

worin $Q_s$ die auf die Abtastelektrode 7 der Elektrometersonde 6 aufgebrachte Influenzladung ist. $C_{in}$ ist die Gesamtkapazität am Eingang des Verstärkers 10, die in der Darstellung gemäß Fig. 1 als externe, gesonderte Kapazität 12 dargestellt ist.

Für die auf die Abtastelektrode 7 aufgebrachte Influenzladung $Q_s$ gilt wiederum:

$$Q_s = - \frac{A}{1 + K\dfrac{d_2}{d_1}} \cdot \left( D_Q + \frac{K \, \varepsilon_0}{U_{HF} \, d_1} \right)$$

worin sind:

A:  die wirksame Fläche der Abtastelektrode 4 der Elektrometersonde 6,

$d_1$:  die Schichtdicke des Photoleiters 1,

$d_2$:  der Abstand zwischen der Sonde 6 und der Oberfläche des Photoleiters 1,

K:  die dielektrische Konstante des Selens,

$D_Q$:  die Oberflächenladungsdichte auf dem Photoleiter 1,

$\varepsilon_0$:  die Dielektrizitätskonstante der Luft und

$U_{HF}$:  Spannungswert der von der Wechselspannungsquelle 5 gelieferten Wechselspannung.

Hieraus wird zum einen deutlich, daß die in der Abtastelektrode der Elektrometersonde 6 erzeugte Influenzladung $Q_s$ aufgrund der in Abhängigkeit der Röntgenstrahlung vorgenommenen Entladung, d.h. also aufgrund der auf dem Photoleiter verbliebenen Oberflächenladungsdichte $D_Q$ bei konstanter Photoleiterschichtdicke $d_1$ nur von dem Abstand $d_2$ zwischen Sonde und Photoleiter abhängt. Entsprechendes gilt für die in der Abtastelektrode 7 erzeugte Influenzladung, die auf die Meßspannung $U_{HF}$ zurückgeht. Das aufgrund dieser Spannung erzeugte Signal kann also zur Messung des Abstandes zwischen der Elektrometersonde und der Oberfläche des Photoleiters 1 herangezogen werden.

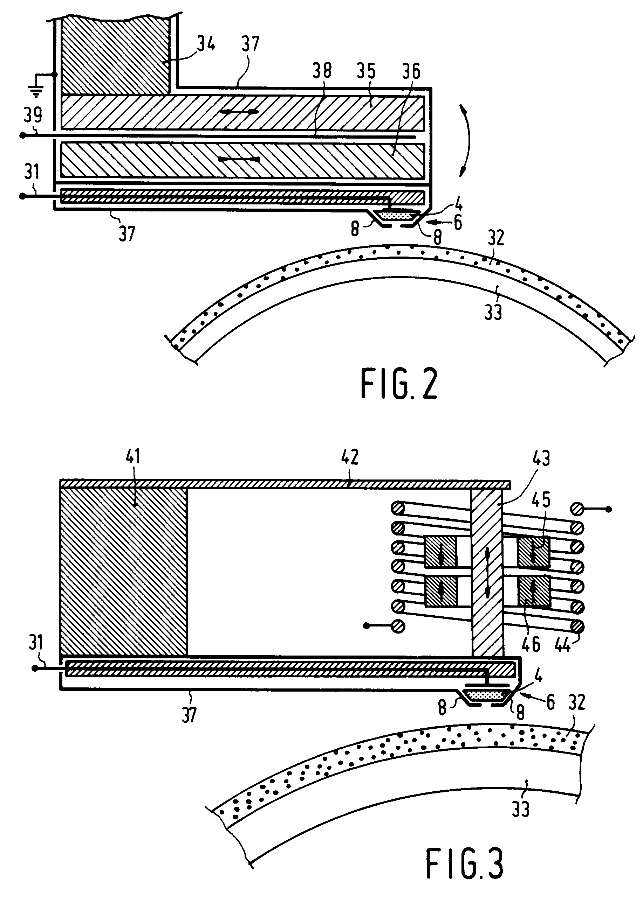

Wie oben bereits beschrieben wurde, gibt die Steuereinheit 26 in Abhängigkeit des Vergleichs des Abstands-Meßsignals jeder Sonde mit einem Sollwertsignal ein entsprechendes Steuersignal an Verstellungsmittel, welche die jeweils zugeordnete Elektrometersonde, oder auch eine Gruppe von Elektrometersonden, in ihrem Abstand relativ zu den Photoleiter 1 verstellen. In den Abbildungen 2 und 3 sind zwei Ausführungsformen der Anordnung jeweils im Schnitt mit Verstellungsmitteln dargestellt, welche auf verschiedenen Wirkungsprinzipien basieren, jedoch im Ergebnis ähnlich wirken. Solche Verstellungsmittel können für jede Elektrometersonde individuell vorgesehen sein. Es gibt darüber hinaus jedoch auch die Möglichkeit, für eine Gruppe mehrerer benachbarter Elektrometersonden jeweils ein Verstellungsmittel vorzusehen.

In Fig. 2 sind eine Elektrometersonde und dazugehörige Verstellungsmittel im Schnitt dargestellt. Eine Elektrometersonde 6 weist eine Abtastelektrode 4 sowie Abschirmelektroden 8 auf. Die Abtastelektrode 4, auf die die zu messenden Ladungen influenziert werden, ist mit einem elektrischen Anschluß 31 versehen, welcher in in der Fig. 2 nicht dargestellter Weise beispielsweise mit dem Eingang 9 des Verstärkers 10 gemäß Fig. 1 verbunden ist.

In der Fig. 2 ist unterhalb der Elektrometersonde 6 ein Photoleiter 32 dargestellt, welcher auf einem Trägersubstrat 33 vorgesehen ist. Der Photoleiter 32 weist in seiner Gesamtheit eine Trommelform auf und wird zur Abtastung des auf ihm gespeicherten Ladungsmusters relativ zu der Elektrometersonde 6 bewegt, wobei in die Abtastelektrode 4 entsprechend dem Ladungsmuster Ladungen influenziert werden.

Zur Verstellung des Abstandes zwischen der Elektrometersonde 6 und der Oberfläche des Photoleiters 32 sind Verstellungsmittel vorgesehen, welche eine in in der Fig. 2 nicht dargestellter Weise ortsfest angebrachte Halterung 34 sowie zwei piezo-elektrische Elemente 35 und 36 aufweisen. Die Halterung 34, die beiden piezo-elektrischen Elemente 35 und 36 sowie die Elektrometersonde 6 sind von einer gemeinsamen, elektrisch leitfähigen Umhüllung 37 umgeben, welche elektrisch geerdet ist. Die Elektrometersonde 6 ist mittels dieser Abschirmung 37 mit den piezo-elektrischen Elementen 35 und 36 mechanisch verbunden.

Zwischen den beiden piezo-elektrischen Elementen 35 und 36 ist eine Elektrode 38 vorgesehen, welche wiederum mit einem elektrischen Anschluß 39 verbunden ist. Diese Elektrode 38 dient dazu, den beiden piezo-elektrischen Elementen 35 und 36 elektrische Spannungen zuzuführen, welche aufgrund des piezo-elektrischen Effekts der Elemente 35 und 36 zur Verformung derselben führen. Die Anordnung ist so ausgelegt, daß die beiden piezo-elektrischen Elemente entgegengesetzt reagieren. Dehnt sich also bei entsprechendem Signal an der Elektrode 38 das piezo-elektrische Element 35 aus, so zieht sich das Element 36 zusammen. Entsprechendes gilt in umgekehrter Weise. Dehnt sich das piezo-elektrische Element 35 aus, während sich das Element 36 zusammenzieht, so wird der Abstand zwischen der Elektrometersonde 6 und der Oberfläche des Photoleiters 32 verringert. In umgekehrter Weise wird bei Ausdehnung des piezo-elektrischen Elementes 36 bzw. Zusammenziehen des Elementes 35 der Abstand vergrößert.

Die Darstellung gemäß Fig. 2 ist selbstverständlich nicht maßstabsgerecht. So kann eine Anordnung gemäß Fig. 2 beispielsweise eine Länge der piezoelektrischen Elemente 35 und 36 von ca. 1 cm aufweisen, welche bei Ansteuerspannungen von etwa 10 V eine Auslenkung der Anordnung im Bereich der Elektrometersonde von ca. 100 μm ermöglichen. Dieses Konzept ermöglicht darüber hinaus eine hohe Regelbandbreite, d.h. die Verstellungsmittel sind in der Lage, Steuersignalen bis zu einigen 100 Hz zu folgen. Es besteht damit die Möglichkeit, auch bei höheren Abtastgeschwindigkeiten, beispielsweise einer Relativgeschwindigkeit zu dem Photoleiter von 5 m/s, dabei auftretende Abstandsschwankungen auszugleichen.

Eine in Fig. 3 im Schnitt dargestellte Anordnung weist ebenfalls eine Elektrometersonde 4 auf, welche mit einem externen elektrischen Anschluß 31 versehen ist und in gleicher Weise aufgebaut ist wie die in Fig. 2 dargestellte Sonde 6. Es ist ein trommelförmiges Substrat 32 vorgesehen, welches mit einem Photoleiter 33 versehen ist.

Die Anordnung gemäß Fig. 3 weist einen Trägerblock 41 auf, der über eine elastische Zunge 42 mit einem Kern 43 verbunden ist, dessen andere Seite mit der äußeren Abschirmung 37 der Elektrometersonde 6 mechanisch verbunden ist. In dem in der Fig. 3 dargestellten Beispiel sind zwei Permanentmagnetringe 45 und 46 vorgesehen, welche an dem Kern 43 montiert sind und um diesen herum verlaufen. Es ist ferner eine Magnetspule 44 vorgesehen, welche mechanisch mit dem Trägerblock 41 verbunden ist, d.h. ortsfest gelagert ist. Bei einem Stromfluß durch die Spule 44 und die Wechselwirkung der Magnetfelder, die von den Magnetringen 45 und 46 bzw. der Spule 44 ausgehen, werden die Magnetringe 45 und 46 und damit auch der Kern 43 bewegt. Da die Elektrometersonde 6 wiederum mit dem Kern 43 mechanisch verbunden ist, wird diese ebenfalls in einer Richtung senkrecht zur Oberfläche des Photoleiters 31 bewegt.

Das elektrische Signal für die Magnetspule 44 wird in entsprechender Weise gewonnen, wie das Steuersignal für die Verstellungsmittel gemäß Fig. 2.

**Patentansprüche**

1. Anordnung zum Abtasten einer Röntgenaufnahme, die auf einem zuvor örtlich gleichmäßig aufgeladenen, auf einem elektrisch leitfähigen Substrat (2) vorgesehenen Photoleiter (1) vorliegfeder in Abhängigkeit der örtlichen Strahlungsintensität entladen wird, mittels mehrerer Elektrometersonden (6), welche das Ladungsmuster des Photoleiters (1) abtasten, wobei eine Messung des Abstandes zwischen den Elektrometersonden (6) und dem Photoleiter (1) mittels einer an das Substrat (2) angekoppelten Wechselspannung erfolgt, die mittels Elektrometersonden abgetastet und zur Gewinnung von Abstands-Meßsignalen ausgefiltert wird, dadurch gekennzeichnet, daß die Ausgangssignale sämtlicher Elektrometersonden (6) zur Bildwerte-Bestimmung der Röntgenaufnahme herangezogen werden, daß die Ausgangssignale wenigstens einiger der Elektrometersonden (6) mittels eines geeigneten Filters (3) auch zur Bestimmung der Abstands-Meßsignale herangezogen werden und daß Verstellungsmittel vorgesehen sind, mittels der in Abhängigkeit der Meßsignale während der Abtastung der Röntgenaufnahme laufend der Abstand zwischen den Elektrometersonden (6) und dem Photoleiter (1) auf einen vorgegebenen Sollwert eingestellt wird.

2. Anordnung nach Anspruch 1, dadurch gekennzeichnet, daß die Ausgangssignale aller Elektrometersonden (6) zur Bestimmung sowohl der Bildwerte wie auch der Abstands-Meßsignale herangezogen werden.

3. Anordnung nach Anspruch 2, dadurch gekennzeichnet, daß mittels der Verstellungsmittel jede Elektrometersonde (6) unter Heranziehung des von ihr gelieferten Meßsignals auf den Soll-Abstand eingestellt wird.

4. Anordnung nach Anspruch 2, dadurch gekennzeichnet, daß mittels der Verstellungsmittel jeweils eine Gruppe benachbarter Elektrometersonden (6) unter Heranziehung der von ihnen gelieferten Meßsignale so positioniert werden, daß der Soll-Abstand im Mittel eingehalten wird.

5. Anordnung nach einem der Ansprüche 1 bis 4, dadurch gekennzeichnet gekennzeichnet, daß piezoelektrische Verstellungsmittel vorgesehen sind.

6. Anordnung nach einem der Ansprüche 1 bis 4, dadurch gekennzeichnet, daß elektro-dynamische Verstellungsmittel vorgesehen sind.

7. Anordnung nach einem der Ansprüche 1 bis 6, dadurch gekennzeichnet, daß die Abstands-Meßsignale mittels Bandpaßfiltern (23) aus den Ausgangssignalen der Elektrometersonden (6) gewonnen werden, daß die so gefilterten Meßsignale einer Steuerung (26) zugeführt werden, die die Meßsignale mit einem Sollwert vergleicht und die Verstellungsmittel so ansteuert, daß die Soll-Abstände eingehalten werden.

8. Anordnung nach einem der Ansprüche 1 bis 7, dadurch gekennzeichnet, daß der Photoleiter (1) sich in einer Ebene erstreckt.

9. Anordnung nach einem der Ansprüche 1 bis 7, dadurch gekennzeichnet, daß der Photoleiter (1) eine Trommelform aufweist.

10. Röntgenstrahlen-Untersuchungsgerät, dadurch gekennzeichnet, daß eine Anordnung nach einem der Ansprüche 1 bis 9 vorgesehen ist.

**Claims**

1. A device for scanning an X-ray image present on a previously locally uniformly charged photoconductor (1) which is provided on an electrically conductive substrate (2) and is discharged in dependence on the local radiation intensity, using several electrometer probes (6) which scan the charge pattern of the photoconductor (1), the distance between the electrometer probes (6) and the photoconductor (1) being measured by means of an alternating voltage which is applied to the substrate (2), is scanned by means of electrometer probes and is filtered out in order to extract distance measuring signals, characterized in that the output signals of all electrometer probes (6) are used for determining image values of the X-ray image, the output signals of at least some of the electrometer probes (6) also being used, *via* a suitable filter (3), for determining the distance measuring signals, there being provided adjusting means whereby the distance between the electrometer probes (6) and the photoconductor (1) is continuously adjusted to a predetermined reference value, in dependence on the measuring signals, during the scanning of the X-ray image.

2. A device as claimed in Claim 1, characterized in that the output signals of all electrometer probes (6) are used for determining the image values as well as the distance measuring signals.

7

3. A device as claimed in Claim 2, <u>characterized in that</u> each electrometer probe (6) is adjusted to the reference distance, via the adjusting means, on the basis of the measuring signal supplied thereby.

4. A device as claimed in Claim 2, <u>characterized in that</u>, using the adjusting means, each time a group of neighbouring electrometer probes (6) is so positioned, using the measuring signals supplied thereby, that the reference distance is maintained on average.

5. A device as claimed in any one of the Claims 1 to 4, <u>characterized in that</u> piezoelectric adjusting means are provided.

6. A device as claimed in any one of the Claims 1 to 4, <u>characterized in that</u> electrodynamic adjusting means are provided.

7. A device as claimed in any one of the Claims 1 to 6, <u>characterized in that</u> the distance measuring signals are extracted from the output signals of the electrometer probes (6) by means of bandpass filters (23), the measuring signals thus filtered being applied to a control circuit (26) which compares the measuring signals with a reference value and which controls the adjusting means so that the reference distances are maintained.

8. A device as claimed in any one of the Claims 1 to 7, <u>characterized in that</u> the photoconductor (1) extends in one plane.

9. A device as claimed in any one of the Claims 1 to 7, <u>characterized in that</u> the photoconductor (1) is shaped as a drum.

10. An X-ray examination apparatus, <u>characterized in that</u> it comprises a device as claimed in any one of the Claims 1 to 9.


**Revendications**

1. Dispositif pour balayer une radiographie, qui est présente sur un photoconducteur (1) préalablement chargé localement de manière uniforme et prévu sur un substrat conducteur de l'électricité (2), lequel photoconducteur est déchargé en fonction de l'intensité du rayonnement local au moyen de plusieurs sondes électrométriques (6), qui balaient le motif de charges du photoconducteur (1), une mesure de la distance entre les sondes électrométriques (6) et le photoconducteur (1) étant effectué au moyen d'une tension alternative appliquée au substrat, qui est balayée au moyen de sondes électrométriques et extraite par filtrage pour obtenir des signaux de mesure de distance, caractérisé en ce que les signaux de sortie de toutes les sondes électrométriques (6) contribuent à la détermination des valeurs d'image de la radiographie, que les signaux de sortie d'au moins certaines des sondes électrométriques (6) contribuent également à la détermination des signaux de mesure de distance au moyen d'un filtre approprié (3) et que des moyens de réglage sont envisagés à l'intervention desquels la distance entre les sondes électrométriques (6) et le photoconducteur (1) sera réglée sur une valeur de consigne en continu en fonction des signaux de mesure au cours du balayage de la radiographie.

2. Dispositif selon la revendication 1, caractérisé en ce que les signaux de sortie de toutes les sondes électrométriques (6) contribuent à la détermination à la fois des valeurs d'image et des signaux de mesure de distance.

3. Dispositif selon la revendication 2, caractérisé en ce que, via les moyens de réglage, chaque sonde électrométrique (6) est réglée à la distance de consigne en mettant à contribution le signal de mesure fourni par cette sonde.

4. Dispositif selon la revendication 2, caractérisé en ce que, via les moyens de réglage, chaque fois un groupe de sondes électrométriques voisines (6) est positionné par mise en oeuvre des signaux de mesure délivrés par ces sondes, de telle sorte que la distance de consigne soit maintenue en moyenne.

5. Dispositif selon l'une quelconque des revendications 1 à 4, caractérisé en ce que des moyens de réglage piézo-électriques sont prévus.

**6.** Dispositif selon l'une quelconque des revendications 1 à 4, caractérisé en ce que des moyens de réglage électrodynamiques sont prévus.

**7.** Dispositif selon l'une quelconque des revendications 1 à 6, caractérisé en ce que les signaux de mesure de distance sont obtenus via des filtres passe-bande (23) à partir des signaux de sortie des sondes électrométriques (6), que les signaux de mesure ainsi filtrés sont acheminés à un système de commande (26) qui compare les signaux de mesure à une valeur de consigne et qui commande les moyens de réglage, de telle sorte que les distances de consigne soient respectées.

**8.** Dispositif selon l'une quelconque des revendications 1 à 7, caractérisé en ce que le photoconducteur (1) s'étend dans un plan.

**9.** Dispositif selon l'une quelconque des revendications 1 à 7, caractérisé en ce que le photoconducteur (1) a la forme d'un tambour.

**10.** Appareil d'examen radiographique, caractérisé en ce qu'un dispositif selon l'une quelconque des revendications 1 à 9, est prévu.

FIG.1

FIG. 2

FIG.3